# EUROPEAN PATENT APPLICATION

(11) **EP 4 693 530 A1**
(43) Date of publication of application: **11.02.2026**
(21) Application number: 24780788.6
(22) Date of filing: 29.03.2024
(51) Int. Cl.: H01M 6/16, H01M 4/06, H01M 4/08, H01M 4/46, H01M 50/531, H01M 50/586, H01M 50/595

(54) **LITHIUM PRIMARY BATTERY**

(30) Priority: 31.03.2023 JP 2023058619
(71) Applicant: Panasonic Intellectual Property Management Co., Ltd., Kadoma-shi, Osaka 571-0057 (JP)
(72) Inventor: NISHIMURA, Naoaki, Kadoma-shi, Osaka 571-0057 (JP); OKAMOTO, Taiju, Kadoma-shi, Osaka 571-0057 (JP); KAWAHARA, Yusuke, Kadoma-shi, Osaka 571-0057 (JP)
(74) Representative: Novagraaf International SA
(86) International application number: PCT/JP2024/013008
(87) International publication number: WO 2024/204693

(57) **Abstract**

A lithium primary battery includes an electrode group and a nonaqueous electrolyte. The electrode group is configured by spirally winding a band-shaped positive electrode and a band-shaped negative electrode with a separator therebetween. The positive electrode contains at least one selected from the group consisting of manganese dioxide and graphite fluoride. The negative electrode contains a lithium alloy. The lithium alloy contains Mg in an amount of 0.02% by mass or more and 11% by mass or less. The negative electrode has a first negative electrode principal surface on the outer peripheral side of the electrode group and a second negative electrode principal surface on the inner peripheral side of the electrode group. The positive electrode has a first positive electrode principal surface on the inner peripheral side of the electrode group and a second positive principal surface on the outer peripheral side of the electrode group. The first negative electrode principal surface has a first facing region facing the first positive electrode principal surface. The second negative electrode principal surface has a second facing region facing the second positive electrode principal surface. The proportion of the total area S1 of the first facing region and the second facing region to the total area S0 of the first negative electrode principal surface and the second negative electrode principal surface is 90% or more.

## Description

### [Technical Field]

The present disclosure relates to a lithium primary battery.

### [Background Art]

Lithium-primary batteries are used as power sources for various electronic devices due to their high energy density and low self-discharge. A wound electrode group of a lithium primary battery is configured by winding, into a spiral shape, a band-shaped positive electrode, a band-shaped negative electrode, and a separator disposed between the positive electrode and the negative electrode. For the positive electrode, manganese dioxide is used, for example. For the negative electrode, sheet-shaped (foil-shaped) metal lithium or lithium alloy is used, for example.

Patent Literature 1 proposes "a nonaqueous electrolyte battery in which: a spiral-shaped electrode body is provided including a band-shaped negative electrode containing a light metal as an active material and a band-shaped positive electrode that are wound with a separator therebetween, the width of the negative electrode is equal to or smaller than the width of the positive electrode, a negative electrode current collecting tab is pressed against the negative electrode so as not to cover the longitudinal front surface of the negative electrode, characterized in that the negative electrode tab is disposed within a 180-degree semicircular portion of the electrode body extending in the winding direction from the winding end of the positive electrode".

Patent Literature 2 proposes "a cylindrical nonaqueous electrolyte primary battery provided with an electrode group having a wound structure in which a positive electrode containing manganese dioxide or fluorinated graphite and a negative electrode are wound into a spiral shape with a separator therebetween, characterized in that the negative electrode includes a metal lithium-containing layer and a current collector, and a lithium-aluminum alloy is formed on a part of a surface of the metal lithium-containing layer that is opposite to the current collector, the part corresponding to 20 to 75% of the width of the metal lithium-containing layer".

Patent Literature 3 proposes "an electrochemical battery characterized by including a spiral electrode stack including an anode, a cathode, and a separator, wherein the separator is disposed between the anode and the cathode and spirally wound together with the anode and the cathode, the outer segment of the anode is disposed along the outer periphery of the electrode stack, the remaining portion of the periphery constitutes an outer segment of the cathode, the length of the outer segment of the anode is less than or equal to 10% of the total length of the anode, the electrochemical battery further includes: an anode tab attached to the inner surface of the outer segment of the anode; an electrolyte; a conductor member that is a member in mechanical and electrical contact with the outer segment of the cathode and that extends beyond the outer edge of the segment over the outer segment of the anode; and an insulating means that is disposed along the inner surface of the outer segment of the anode and that serves as a barrier to ion transfer, and during voltage reversal, an anode metal is preferentially plated from the outer segment of the anode to the opposing conductor member".

Patent Literature 4 proposes "a lithium primary battery including an electrolyte and an electrode group in which a positive electrode containing iron disulfide as a positive electrode active material and a negative electrode containing a lithium alloy as a negative electrode active material are wound with a separator therebetween, wherein the lithium alloy contains at least one of magnesium and tin in an amount of 0.02 to 0.2 mol%".

### [Citation List]

### [Patent Literatures]

[Patent Literature 1] Japanese Unexamined Utility Model Application Publication No. H 2-70365
[Patent Literature 2] Japanese Laid-Open Patent Publication No. 2009-266715
[Patent Literature 3] Japanese Laid-Open Patent Publication No. H 2-257573
[Patent Literature 4] International Publication No. 2012/066709

### [Summary of Invention]

### [Technical Problem]

Lithium is nonuniformly consumed in a negative electrode in discharge to cause severe local lithium consumption, with a result that a part of the negative electrode is chipped or fracture at the end of discharge, isolating the lithium. The isolated lithium may not contribute to discharge due to electrical disconnection with the negative electrode current collector, resulting in deterioration of battery performance.

### [Solution to Problem]

One aspect of the present disclosure relates to a lithium primary battery including: a wound electrode group; and a nonaqueous electrolyte, wherein the electrode group is configured by winding, into a spiral shape, a positive electrode having a band shape, a negative electrode having a band shape, and a separator located between the positive electrode and the negative electrode, the positive electrode contains at least one selected from the group consisting of manganese dioxide and fluorinated graphite, the negative electrode contains a lithium alloy, the lithium alloy contains magnesium in an amount of 0.02% by mass or more and 11% by mass or less, the negative electrode has a first negative electrode principal surface on an outer peripheral side of the electrode group, and a second negative electrode principal surface on an inner peripheral side of the electrode group, the positive electrode has a first positive electrode principal surface on the inner peripheral side of the electrode group, and a second positive electrode principal surface on the outer peripheral side of the electrode group, the first negative electrode principal surface has a first facing region facing the first positive electrode principal surface, the second negative electrode principal surface has a second facing region facing the second positive electrode principal surface, and a proportion of a total area S1 of the first facing region and the second facing region to a total area S0 of the first negative electrode principal surface and the second negative electrode principal surface is 90% or more.

### [Advantageous Effects of Invention]

According to the present disclosure, performance deterioration of a lithium primary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an example of a wound electrode group of a lithium primary battery according to an embodiment of the present disclosure.
[FIG. 2] FIG. 2 is a schematic top view of an example in the vicinity of the connection portion between a negative electrode and a negative electrode lead member.
[FIG. 3] FIG. 3 is a schematic cross-sectional view of an example in the vicinity of the connection portion between the negative electrode and the negative electrode lead member.
[FIG. 4] FIG. 4 is a schematic sectional view of another example in the vicinity of the connection portion between the negative electrode and the negative electrode lead member.
[FIG. 5] FIG. 5 is a schematic sectional view of still another example in the vicinity of the connection portion between the negative electrode and the negative electrode lead member.
[FIG. 6] FIG. 6 is a front view of a lithium primary battery according to an embodiment of the present disclosure, a part of which is illustrated in cross section.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

A lithium primary battery according to an embodiment of the present disclosure includes an electrode group of wound type and a nonaqueous electrolyte. The electrode group is configured by winding, into a spiral shape, a positive electrode having a band shaped, a negative electrode having a band shape, and a separator provided between the positive electrode and the negative electrode. The positive electrode contains at least one selected from the group consisting of manganese dioxide and fluorinated graphite as a positive electrode active material. The negative electrode contains a lithium alloy as a negative electrode active material. The lithium alloy contains magnesium (Mg) in an amount of 0.02% by mass or more and 11% by mass or less.

The negative electrode has a first negative electrode principal surface located on the outer peripheral side of the electrode group and a second negative electrode principal surface located on the inner peripheral side of the electrode group. The positive electrode has a first positive electrode principal surface located on the inner peripheral side of the electrode group and a second positive electrode principal surface located on the outer peripheral side of the electrode group. The first negative electrode principal surface has a first facing region facing the first positive electrode principal surface. The second negative electrode principal surface has a second facing region facing the second positive electrode principal surface. The proportion of a total area S1 of the first facing region and the second facing region relative to a total area S0 of the first negative electrode principal surface and the second negative electrode principal surface (hereinafter, also referred to as "S1/S0 rate") is 90% or more. The S1/S0 rate means (S1/S0) × 100.

There may be a case in which a negative electrode lead member is connected at a specified position of a negative electrode principal surface (first principal surface or second principal surface) and an insulating tape to cover the negative electrode lead member is attached thereto. In this case, the area of the part in which the negative electrode principal surface is covered with the insulating tape either directly or via the negative electrode lead member is not included in the area of the negative electrode principal surface (the total area S0 of the negative electrode principal surface).

There may be also a case in which the negative electrode lead member is connected at a specified position of a negative electrode principal surface (first principal surface or second principal surface) in a facing region between the corresponding positive electrode principal surface and the negative electrode principal surface and the insulating tape to cover the negative electrode lead member is attached thereto. In this case, the area of the part in which the negative electrode principal surface is covered, directly or via the negative electrode lead member, with the insulating tape is not included in the area of the facing region between the corresponding positive electrode principal surface and the negative electrode principal surface (the total area S1 of the facing region).

There may further be a case in which in a facing region between a positive electrode principal surface and a negative electrode principal surface, a positive electrode lead member is connected at a specified position of the positive electrode principal surface and an insulating tape to cover the positive electrode lead member is attached thereto. In this case, the area of the part in which the positive electrode principal surface is covered with the insulating tape directly or via the positive electrode lead member is included in the area of the facing region between the positive electrode principal surface and the negative electrode principal surface (the total area S1 of the facing region).

As a result of the Mg content in the lithium alloy being 0.02% by mass or more, the strength of the negative electrode is improved. As a result of the S1/S0 rate being 90% or more, lithium is uniformly consumed in the negative electrode during discharging. As a result of the combination of these factors, isolation of lithium due to chipping or fracture of a part of the negative electrode at the end of discharge is suppressed to significantly suppress the deterioration of battery performance (e.g., pulse discharge characteristics) due to isolation of lithium. In the lithium primary battery according to the present disclosure, the isolation of the negative electrode at the end of discharge is suppressed to maintain the shape of the negative electrode, thereby ensuring the conductivity of the entire negative electrode, so that the lithium of the negative electrode is effectively utilized. As a result, high output characteristics are obtained even at the end of discharge. However, when the Mg content in the lithium alloy exceeds 11% by mass, the proportion of Li in the negative electrode is small, and the absolute amount of Li is reduced, so that the battery performance may deteriorate.

The S1/S0 rate is preferably 95% or more, and more preferably 98% or more.

When the Mg content in the lithium alloy is less than 0.02% by mass, the negative electrode may fracture at the end of discharge due to a decrease in strength of the negative electrode even if the S1/S0 rate is 90% or more.

When the S1/S0 rate is less than 90%, the region in which the first negative electrode principal surface does not face the first positive electrode principal surface is large at the end portion on the winding-end side of the negative electrode, so that lithium is less likely to be consumed in the region and is consumed much in a region other than the region. In this case, even if the Mg content in the lithium alloy is 0.02% by mass or more, the negative electrode may fracture at the end of discharge due to nonuniform consumption of lithium.

Because the S1/S0 rate can be easily adjusted to 90% or more, it is preferable that the positive and negative electrodes are wound so that the positive electrode is located at the outermost periphery of the electrode group. That is, it is preferable that the positive electrode includes an outermost peripheral portion located at the outermost periphery of the electrode group. Typically, the positive and negative electrodes are wound so that the positive electrode is located at the innermost periphery of the electrode group. If the negative electrode is located at the innermost periphery of the electrode group, there is a possibility that a burr of the positive electrode current collector at the end portion on the winding-start side of the positive electrode pierces the separator and comes in contact with the negative electrode.

The negative electrode lead member may be connected to the negative electrode. The negative electrode lead member may be mounted on the first negative electrode principal surface or may be mounted on the second negative electrode principal surface. The negative electrode lead member has a flaky shape, for example. For the material of the negative electrode lead member, a material should be used that is electrically connectable to lithium alloy and that has durability against the nonaqueous electrolyte. Examples of the material of the negative electrode lead member include Ni, Fe, Cu, Sn, Au, Pt, stainless steel, and conductive resins. The negative electrode lead member may contain one or two or more of these materials. The negative electrode lead member is connected, for example, by pressure bonding to a lithium alloy foil or the negative electrode current collector. For example, one end of the negative electrode lead member is connected to the negative electrode, while the other end of the negative electrode lead member is connected to a negative electrode terminal provided on a battery cover (sealing member). When the battery case also serves as a negative electrode terminal, the other end of the negative electrode lead member may be connected to the inner bottom surface of battery case.

From the viewpoint of prevention and protection against internal short circuits, it is preferable that an insulating tape is attached to the negative electrode to cover the connection portion between the negative electrode lead member and the negative electrode and the vicinity of the connection portion.

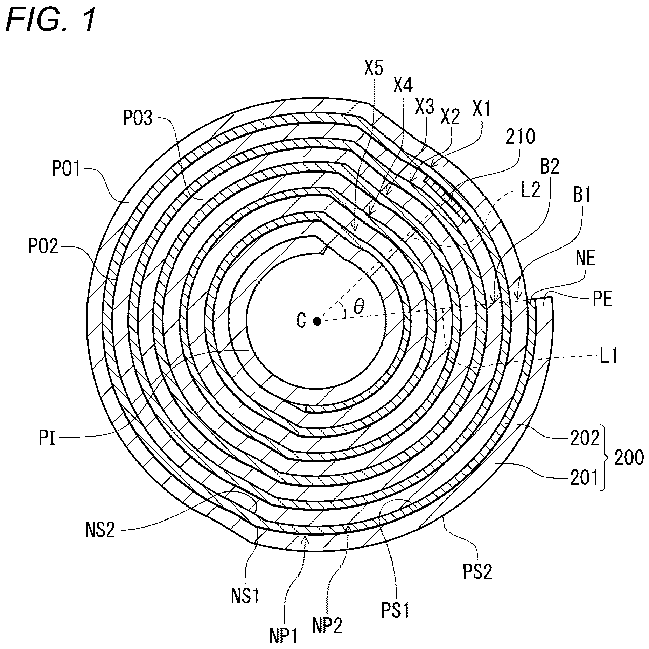

FIG. 1 is a schematic cross-sectional view of an example of a wound electrode group of a lithium primary battery according to an embodiment of the present disclosure. FIG. 1 illustrates a cross-section perpendicular to the winding axis of the electrode group. Although the separator is provided between the positive electrode and the negative electrode, the separator is not illustrated and is omitted in FIG. 1 for the sake of convenience. Note that FIG. 1 is a schematic diagram and does not necessarily reflect the actual dimensions, thicknesses, and the like. FIG. 1 only illustrates an example of the electrode group, and the electrode group included in the lithium primary battery of the present disclosure is not limited thereto. The positional relationship between the end portions on the winding-start side and the end portions on the winding-end side of the positive and negative electrodes, the number of turns, and the like are not limited to the illustrated example.

The lithium primary battery includes an electrode group 200 housed in an electrode case. As illustrated in FIG. 1, the electrode group 200 is configured by winding, into a spiral shape, a positive electrode 201 having a band shape and a negative electrode 202 having a band shape. A separator (not illustrated) is provided between the positive electrode 201 and the negative electrode 202. The positive electrode 201 contains at least one selected from the group consisting of manganese dioxide and fluorinated graphite. The negative electrode 202 contains a lithium alloy, and the lithium alloy contains Mg in an amount of 0.02% by mass or more and 11% by mass or less. Although not illustrated, a positive electrode lead member may be connected to the positive electrode 201.

The negative electrode 202 has a first negative electrode principal surface NS1 located on the outer peripheral side of the electrode group 200 and a second negative electrode principal surface NS2 located on the inner peripheral side of the electrode group 200. The positive electrode 201 has a first positive electrode principal surface PS1 located on the inner peripheral side of the electrode group 200 and a second positive electrode principal surface PS2 located on the outer peripheral side of the electrode group 200. The first negative electrode principal surface NS1 has a first facing region NP1 facing the first positive electrode principal surface PS1. The second negative electrode principal surface NS2 has a second facing region NP2 facing the second positive electrode principal surface PS2.

The positive electrode 201 and the negative electrode 202 are wound such that the positive electrode 201 is located at the outermost and innermost peripheries of the electrode group 200. The positive electrode 201 has an innermost peripheral portion PI located at the innermost periphery of the electrode group 200. The innermost peripheral portion PI is a portion in which at least the inner peripheral side (the first positive electrode principal surface PS1) of the positive electrode does not face the negative electrode 202. The innermost peripheral portion PI is formed by at least one full turn at the innermost periphery of the electrode group 200. The innermost peripheral portion PI is formed by 1 to 1.9 turns at the innermost periphery of the electrode group 200, for example.

The positive electrode 201 has an outermost peripheral portion PO1 located at the outermost periphery of the electrode group 200. The outermost peripheral portion PO1 is a portion in which at least the outer peripheral side (the second positive electrode principal surface PS2) of the positive electrode does not face the negative electrode 202. In FIG. 1, the outermost peripheral portion PO1 is formed by one full turn at the outermost periphery of the electrode group 200. In the electrode group 200, the positive electrode 201 and the negative electrode 202 are wound such that an end PE on the winding-end side of the positive electrode 201 and an end NE on the winding-end side of the negative electrode 202 are located at almost the same position.

In the electrode group of FIG. 1, the entirety of the first negative electrode principal surface NS1 faces the first positive electrode principal surface PS1, and the entirety of the second negative electrode principal surface NS2 faces the second positive electrode principal surface PS2. The proportion (S1/S0 rate) of the total area S1 of the first facing region NP1 and the second facing region NP2 relative to the total area S0 of the first negative electrode principal surface NS1 and the second negative electrode principal surface NS2 is 100%.

The outermost peripheral portion PO1 is formed by one full turn at the outermost periphery of the electrode group in FIG. 1, but may be formed by one or more turns at the outermost periphery of the electrode group, or may be formed by 1 to 1.4 turns at the outermost periphery of the electrode group, for example. In this case, the S1/S0 rate is 100%. In FIG. 1, the S1/S0 rate is 100%. However, the S1/S0 rate should be 90% or more. The outermost peripheral portion PO1 may be smaller than one full turn at the outermost periphery of the electrode group as long as the S1/S0 rate is 90% or more.

The positive electrode 201 has an n-th peripheral portion PO(n+1), which is located at the n-th turn inward of the outermost peripheral portion PO1 located at the outermost periphery of the electrode group 200. n is an integer of 1 or more. The positive electrode 201 in FIG. 1 has a first peripheral portion to a fourth peripheral portion. In FIG. 1, PO2 represents the first peripheral portion (n = 1) located at the first full turn inward of the outermost peripheral portion PO1, and PO3 represents the second peripheral portion (n = 2) located at the second full turn inward of the outermost peripheral portion PO1. In the wound positive electrode 201, a position B1 indicates an end of the outermost peripheral portion PO1 on the side of the first peripheral portion PO2, and a position B2 indicates an end of the first peripheral portion PO2 on the side opposite the outermost peripheral portion PO1. The outermost peripheral portion PO1 is a region from the end PE on the winding-end side to the position B1 of the wound positive electrode 2011. The first peripheral portion PO2 is a region from the position B1 to the position B2 of the wound positive electrode.

The negative electrode 202 has a region X1, at the outermost peripheral portion PO1, in which the first negative electrode principal surface NS1 faces the first positive electrode principal surface PS1. In FIG. 1, the negative electrode lead member 210 is connected to the second negative electrode principal surface NS2 in the region X1. In view of the fact that the region X1 has a small curvature, a good connection between the negative electrode 202 and the negative electrode lead member 210 can be readily ensured.

The negative electrode 202 has a region X(n + 1), at an n-th peripheral portion PO(n + 1), in which the first negative electrode principal surface NS1 faces the first positive electrode principal surface PS1. n is an integer of 1 or more. The negative electrode lead member 210 may be connected to the second negative electrode principal surface NS2 in the region X(n + 1). In the case of FIG. 1, the negative electrode 202 has the region X1 and regions X2 to X5 (n = 1 to 4) located inward of the region X1. In FIG. 1, the negative electrode lead member 210 is connected in the region X1 but may be connected in any one of the regions X2 to X5. For example, the negative electrode lead member 210 may be connected in the region X2 facing the first positive electrode principal surface PS1 at the first peripheral portion PO2.

The region in which the negative electrode lead member 210 is connected in FIG. 1 is preferably any of the regions X2 to X4, and more preferably the region X3 located near the center of the electrode group 200 in the radial direction. In this case, fracture of the negative electrode at the end of discharge is further significantly suppressed, and a good connection between the negative electrode 202 and the negative electrode lead member 210 is readily maintained. Further, the pulse discharge characteristics tend to improve. The reasons for these may be that when the negative electrode lead member is located at the central part or near the central part of the electrode group in the radial direction, the influence of negative electrode winding is reduced and the negative electrode capacity relative to the positive electrode capacity is relatively large, as compared to the case in which the member is located at the end of the electrode group in the radial direction. For example, in the region X1, lithium is consumed from the outermost peripheral portion PO1 and the half of the first peripheral portion PO2 on the side of the region X1. By contrast, in the region X2, lithium is consumed from the half of the first peripheral portion PO2 on the side of the region X2 and the half of the second peripheral portion PO3 on the side of the region X2. The ratio (positive electrode capacity/negative electrode capacity) per area in the region X2 is smaller than in the region X1.

The negative electrode lead member 210 may be connected to the first negative electrode principal surface NS1 but is preferably connected to the second negative electrode principal surface NS2 as in FIG. 1. When the negative electrode lead member 210 is connected to the second negative electrode principal surface NS2, the negative electrode 202 curves into a concave shape toward the side of the second negative electrode principal surface NS2 (inner peripheral side) in association with winding of the negative electrode 202. Thus, the electric connection can be stably ensured. Further, the edge surface of the negative electrode lead member 210 in the widthwise direction (winding direction) is readily covered with the negative electrode 202, with a result that short circuits caused due to the presence of burrs on the edge surface can be suppressed.

As illustrated in FIG. 1, L1 represents a line segment connecting the end PE on the winding-end side of the positive electrode 201 (outermost peripheral portion PO1) and an axial center C (winding axis), and L2 represents a line segment connecting the negative electrode lead member 210 connected in the region X1 and the axial center C. An angle θ in FIG. 1 formed between L1 and L2 may be, for example, 270° or less, 180° or less, 90° or less, or 45° or less. As isolation of lithium at the end of discharge is suppressed and the shape of the entire negative electrode is maintained until the end of discharge, the position at which the negative electrode lead member is connected can be determined as appropriate according to the configuration of the battery. The same applies when the negative electrode lead member is connected in any one of the regions X2 to X5.

When the negative electrode lead member 210 is connected in the region X1, the negative electrode lead member 210 is preferably connected at the position in the region X1 in which the angle θ in FIG. 1 is in the range of 0 to 50°. In this case, the pulse discharge characteristics tend to improve. As the electrode group expands in the radial direction in association with expansion of the positive electrode during discharge, the outer peripheral surface of the electrode group comes in contact with the inner surface of the battery case to cause nonuniform surface pressure of the electrode group on the outer peripheral side of the electrode group including the region X1, leading to nonuniform discharge rection. In a part of the region X1 (θ = 0° to 50°), such nonuniform discharge reaction is suppressed as compared to in a part of the region X1 (θ = over 50°). Therefore, it is presumed that a good connection between the negative electrode and the negative electrode lead member is more readily maintained during discharge, further improving the pulse discharge characteristics.

By contrast, when the negative electrode lead member 210 is connected in the region X(n + 1) inward of the region X1, the influence of the nonuniform surface pressure on the outer peripheral side of the electrode group is reduced in the region X(n + 1) as compared to in the region X1. Therefore, the effect of improving the pulsed discharging property is stably obtained at any position in the region X(n + 1).

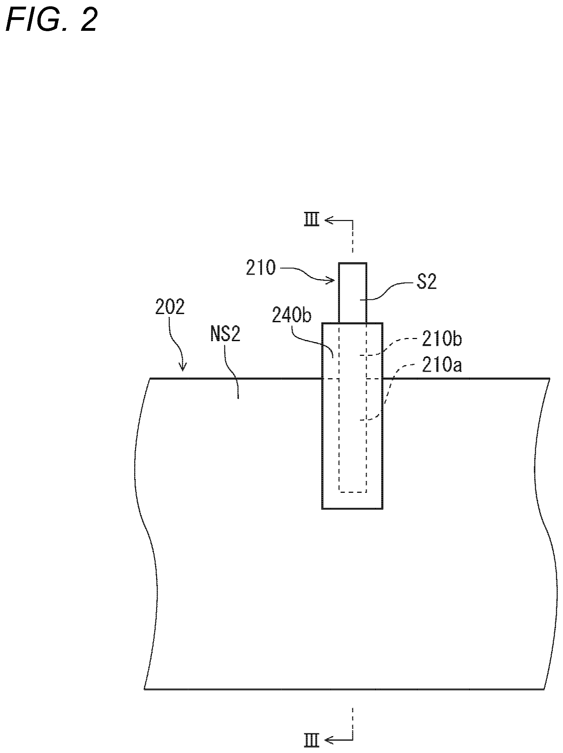

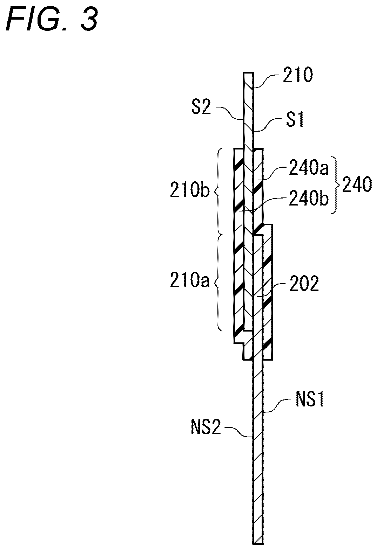

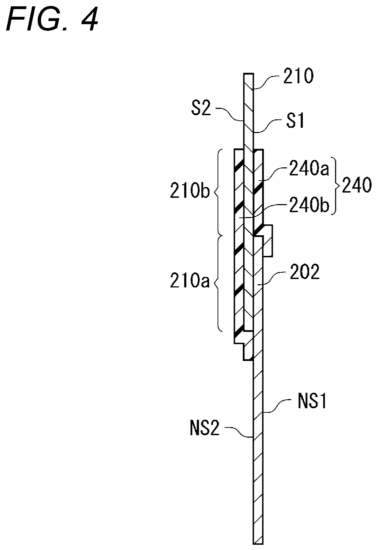

FIG. 2 is a schematic top view of an example in the vicinity of the connection portion between the negative electrode and the negative electrode lead member. FIG. 3 is a schematic cross-sectional view of an example in the vicinity of the connection portion between the negative electrode and the negative electrode lead member. FIG. 3 is a cross-sectional view taken along the line III-III in FIG. 2. FIG. 4 is a schematic cross-sectional view of another example in the vicinity of the connection portion between the negative electrode and the negative electrode lead member. FIGS. 3 and 4 illustrate cross sections in the widthwise direction of the negative electrode.

As illustrated in FIGS. 2 to 4, the negative electrode lead member 210 has a first principal surface S1 located on the side of the negative electrode 202 and a second principal surface S2 located on the side opposite the first principal surface S1. The negative electrode lead member 210 has a first region 210a that overlaps with the negative electrode 202 and a second region 210b in the vicinity of the first region 210a. In the first region 210a, the first principal surface S1 is in close contact with the second negative electrode principal surface NS2.

Insulating tapes 240 to cover the negative electrode lead member 210 are attached to the negative electrode 202. Specifically, a first insulating tape 240a is attached to the negative electrode 202 to cover the first principal surface S1 in the first region 210a and the second region 210b. A second insulating tape 240b is attached to the negative electrode 202 to cover the second principal surface S2 in the first region 210a and the second region 210b. A part of the second negative electrode principal surface NS2 is covered with the second insulating tape 240b. A part of the first negative electrode principal surface NS1 is covered with the first insulating tape 240a. The first insulating tape 240a in FIG. 4 is smaller than the first insulating tape 240a in FIG. 3 in size and in the area covering the first negative electrode principal surface NS1.

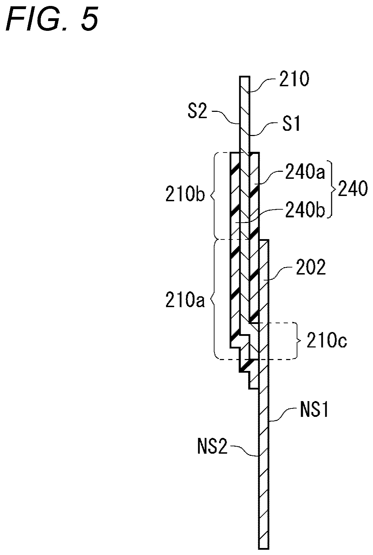

FIG. 5 is a schematic cross-sectional view of still another example in the vicinity of the connection portion between the negative electrode and the negative electrode lead member. FIG. 5 illustrates a cross section in the widthwise direction of the negative electrode.

As illustrated in FIG. 5, the negative electrode lead member 210 has a first principal surface S1 located on the side of the negative electrode 202 and a second principal surface S2 located on the side opposite the first principal surface S1. The negative electrode lead member 210 has a first region 210a that overlaps with the negative electrode 202 and a second region 210b located in the vicinity of the first region 210a. The first region 210a has a connection region 210c in which the first principal surface S1 is in close contact with the second negative electrode principal surface NS2. A region of the first region 210a other than the connection region 210c overlaps with the negative electrode 202 with the first insulating tape 240a therebetween.

Insulating tapes 240 to cover the negative electrode lead member 210 are attached to the negative electrode 202. Specifically, a first insulating tape 240a is attached to the second negative electrode principal surface NS2 to cover the first principal surface S1 in the first region 210a (except the connection region 210c) and the second region 210b. A second insulating tape 240b is attached to the second negative electrode principal surface NS2 to cover the second principal surface S2 in the first region 210a and the second region 210b. A part of the second negative electrode principal surface NS2 is covered with the first insulating tape 240a and the second insulating tape 240b. The first principal surface S1 in a region that is in the first region 210a other than the connection region 210c and in the second region 210b is covered with the first insulating tape 240a with the negative electrode 202 not therebetween. The first negative electrode principal surface NS1 is covered with neither the first insulating tape 240a nor the second insulating tape 240b. As compared to the cases of FIGS. 3 and 4 in which a part of the first negative electrode principal surface NS1 is covered with the first insulating tape, a larger area of the first negative electrode principal surface NS1 that contributes to the discharge reaction (lithium consumption) can be ensured. This is advantageous in terms of improving output characteristics and increasing the energy density.

Note that the first negative electrode principal surface NS1 and the second negative electrode principal surface NS2 in FIGS. 3 to 5 may be the second negative electrode principal surface NS2 and the first negative electrode principal surface NS1, respectively.

The S1/S0 rate can be determined as follows.

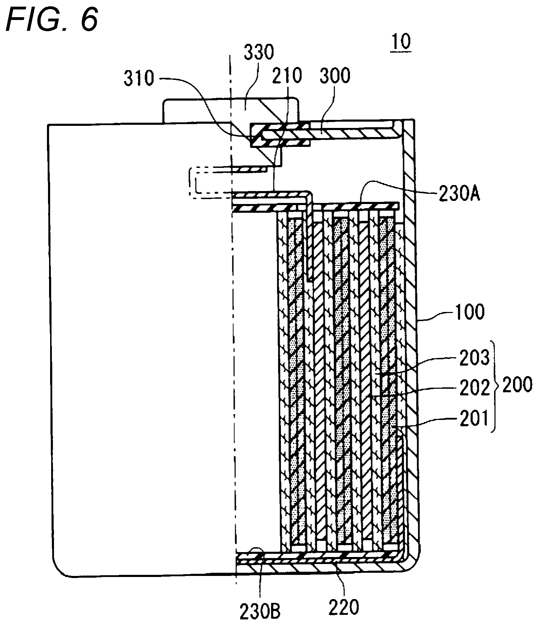

A wound electrode group is taken out of a battery prior to use (non-discharged state), and one end face of the electrode group (e.g., the bottom end face of an electrode case 100 of the electrode group 200 in FIG. 6) is observed to confirm that the positive electrode is located at the outermost periphery (the outermost peripheral portion) of the electrode group. If the electrode group is covered with a separator, the separator may be removed for confirmation. When the outermost peripheral portion is formed by one or more turns at the outermost periphery of the electrode group, the S1/S0 rate is 100%.

When the outermost peripheral portion is formed by less than one turn at the outermost peripheral portion of the electrode group, the point at which the first negative electrode principal surface faces the end on the winding-end side of the positive electrode (outermost peripheral portion) is marked. The negative electrode is then taken out of the electrode group and unfolded. The length and width dimensions of the negative electrode are measured to determine the total area S0 of the first negative electrode principal surface and the second negative electrode principal surface. The length of the first negative electrode principal surface from the end on the winding-start side to a marked point P is measured to determine the area of the first facing region from the length and the width. The area of the second facing region is the same as the area of the second negative electrode principal surface. The total area S1 of the first facing region and the second facing region is obtained to determine the S1/SO rate.

Note that a part of the first negative electrode principal surface covered with an insulating tape is not included in the first negative electrode principal surface when the insulating tape is attached to the first negative electrode principal surface to cover the negative electrode lead member. A part of the second negative electrode principal surface covered with an insulating tape is not included in the second negative electrode principal surface when the insulating tape is attached to the second negative electrode principal surface to cover the negative electrode lead member.

Preferably, the ratio (positive electrode capacity/negative electrode capacity) of the positive electrode capacity to the negative electrode capacity is less than 1. In this case, isolation of lithium due to partial chipping or fracture of the negative electrode at the end of discharge tends to be suppressed. The ratio (positive electrode capacity/negative electrode capacity) may be, for example, 0.91 to 0.96 or 0.92 to 0.95.

Hereinafter, the lithium primary battery of the present disclosure will be described in more detail.

### (Negative Electrode)

The negative electrode contains a lithium alloy and the lithium alloy contains Mg in an amount of 0.02 to 11% by mass. From the viewpoint of ensuring the capacity, the Li content in the lithium alloy may be 89% by mass or more, or 95% by mass or more.

The negative electrode can contain a lithium alloy in the form of a foil (sheet). The lithium alloy is formed into any shape and thickness according to the shape, size, standard performance, and the like of the lithium primary battery.

The negative electrode may include a negative electrode current collector (e.g., a copper foil) carrying the lithium alloy or may be a lithium alloy in the form of a foil without a negative electrode current collector. The shape of the negative electrode (lithium alloy) is maintained in the battery of the present disclosure even at the end of discharge to ensure the conductivity of the entire negative electrode even without a negative electrode current collector. The battery can exhibit increased energy density (high capacity) relative to the volume of the negative electrode current collector. Owing to the lithium alloy containing Mg and a relatively strong Mg remaining at the end of discharge, the negative electrode can be constituted using only lithium alloy in the form of foil (sheet) without using a negative electrode current collector.

The lithium alloy contains at least Mg, and may be substantially free of Al, but preferably contains Al from the viewpoint of improving the output voltage. Hereinafter, a lithium alloy containing Mg and substantially free of Al is also referred to as a "Li-Mg alloy". A lithium alloy containing Mg and Al are also referred to as "Li-Mg-Al alloy". Note that "substantially free of Al" means that the amount of Al is less than the detection limit in composition analysis (e.g., ICP emission spectroscopy or atomic absorption spectroscopy) of the lithium alloy.

That is, the lithium alloy may be a Li-Mg alloy, and a Li-Mg-Al alloy is preferable. When the lithium alloy contains Mg, a relatively strong Mg remains in the form of a thin foil (sheet) at the end of discharge to play a role of a core material, thereby suppressing fracture of the negative electrode at the end of discharge. When the lithium alloy contains Al, a negative electrode coating having a low resistance is formed. When the lithium alloy contains Mg together with Al, nonuniform consumption of Li due to segregation of Al is suppressed. In this case, the effect by Mg and Al is stably obtained in the entire negative electrode, and Li is uniformly consumed at the surface portion of the negative electrode, further increasing the proportion of Li that can contribute to the discharge reaction at the end of discharge.

The Li-Mg-Al alloy forms a coating film having a low resistance to increase the output voltage as compared to a lithium metal or a lithium alloy containing only one of Mg and Al.

The Mg content in the Li-Mg alloy is preferably 0.05% by mass or more and 3% by mass or less, and more preferably 0.2% by mass or more and 1% by mass or less.

The Mg content in the Li-Mg-Al alloy is preferably 0.05% by mass or more and 3% by mass or less, and more preferably 0.2% by mass or more and 1% by mass or less. The Al content in the Li-Mg-Al alloy is preferably 0.01% by mass or more (or 0.1% by mass or more) and 0.5% by mass or less. The total content of Mg and Al in the Li-Mg-Al alloy may be 0.03% by mass or more and 11% by mass or less or may be 0.1% by mass or more and 5% by mass or less. In the Li-Mg-Al alloy, the mass ratio: Mg/Al of Mg to Al may be 0.2 or more and 50 or less, for example.

The lithium alloy may contain an optional metal element other than Li, Mg, and Al. Examples of the optional element include Sn, Ni, Pb, In, and K. From the viewpoint of ensuring the discharging capacity and stabilizing the internal resistance, the total content of the metal element(s) other than lithium in the lithium alloy is preferably 11% by mass or less.

The composition of the lithium alloy can be determined by inductively coupled plasma (ICP) emission spectroscopy or atomic absorption spectroscopy (AAS).

### (Positive Electrode)

The positive electrode contains, as a positive electrode active material, at least one selected from the group consisting of manganese dioxide and graphite fluoride. When the positive electrode as above is used, it is advantageous in terms of output voltage as compared to a positive electrode containing iron disulfide. As the manganese dioxide, a sintered body of electrolytic manganese dioxide is preferably used. The positive electrode containing manganese dioxide exhibits a relatively high voltage, which is advantageous in terms of improving discharge characteristics (pulse discharge characteristics). Chemical manganese dioxide may be contained. The manganese dioxide may be in a mixed crystal state including multiple types of crystal states. The positive electrode may contain a manganese oxide other than manganese dioxide. Examples of the manganese oxide other than manganese dioxide include MnO, Mn₃O₄, Mn₂O₃, and Mn₂O₇. Preferably, manganese dioxide is the main component of the manganese oxide contained in the positive electrode. Here, the main component means that the proportion of the manganese dioxide in the manganese oxide is 50% by mass or more. The proportion of the manganese dioxide in the manganese oxide may be 70% by mass or more, or 90% by mass or more.

If iron disulfide is used for the positive electrode active material, the output voltage is significantly reduced. This is because the positive electrode containing iron disulfide has a lower standard electrode potential than a positive electrode containing manganese dioxide or graphite fluoride. The nominal voltage of a lithium primary battery containing manganese dioxide or graphite fluoride as a positive electrode active material is 3.0 V, whereas the nominal voltage of a lithium primary battery containing iron disulfide as the positive electrode active material is 1.5 V. Due to the nominal voltage differing by about 1.5 V, the output voltage drops significantly particularly in pulse discharge at low temperatures when iron disulfide is used as the positive electrode active material. In the positive electrode containing iron disulfide, the influence of Fe and S eluted from the positive electrode may cause a voltage drop at the end of discharge.

The positive electrode includes, for example, a band-shaped positive electrode current collector and a positive electrode mixture layer held by the positive electrode current collector. The positive electrode mixture layer is formed by, for example, applying a positive electrode mixture in a wet state to the surface of a sheet-shaped positive electrode current collector or introducing the mixture into the positive electrode current collector, applying pressure in the thickness direction, and drying.

The positive electrode mixture may contain, for example, a positive electrode active material, a binder, and a conductive agent. Examples of the binder include fluorocarbon resins such as polytetrafluoroethylene, rubber particles, and acrylic resins. Examples of the conductive agent include conductive carbon materials. Examples of the conductive carbon materials include natural graphite, artificial graphite, carbon black, and carbon fiber.

Examples of the material of the positive electrode current collector include stainless steel, aluminum, and titanium. The positive electrode current collector is preferably a perforated current collector. Examples of the perforated current collector include expanded metal, net, and punched metal.

### (Nonaqueous Electrolyte)

The nonaqueous electrolyte contains a nonaqueous solvent and a lithium salt, for example. The concentration of lithium ions (total concentration of the lithium salt) contained in the nonaqueous electrolyte is, for example, 0.2 mol/L or more and 2.0 mol/L or less, and may be 0.3 mol/L or more and 1.5 mol/L or less.

The nonaqueous solvent may be an organic solvent that can be generally used in nonaqueous electrolytes of lithium primary batteries. Examples of the nonaqueous solvent include ethers, esters, and carbonic acid ester. Examples of the nonaqueous solvent include dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, and propyl acetate. The nonaqueous electrolyte may contain one nonaqueous solvent or two or more nonaqueous solvents.

From the viewpoint of improving the discharge characteristics of the lithium primary battery, the nonaqueous solvent preferably contains a cyclic carbonate having a high boiling point and a chain ether having a low viscosity even at low temperatures. The cyclic carbonate preferably includes at least one selected from the group consisting of PC and EC, and particularly preferably includes PC. The cyclic ether preferably includes DME.

The lithium salt may be a lithium salt used as a solute in a lithium primary battery, for example. Examples of such a lithium salt include LiCF₃SO₃, LiClO₄, LiBF₄, LiPF₆, LiRaSO₃ (Ra represents a fluorinated alkyl group having a carbon number of 1 to 4), LiFSO₃, LiN(SO₂Rb)(SO₂Rc) (Rb and Rc represents each independently a fluorinated alkyl group having a carbon number of 1 to 4), LiN (FSO₂)₂, LiN(SO₂CF₃)₂, LiN(SO₂F)(POF₂), LiPO₂F₂, LiB(C₂O₄)₂, and LiBF₂(C₂O₄). Among these, at least one selected from the group consisting of LiCF₃SO₃, LiBF₄, and LiN(FSO₂)₂) is preferable in terms of stabilization with respect to the lithium alloy containing Al and Mg. The nonaqueous electrolyte may contain one or two or more of these lithium salts.

The nonaqueous electrolyte may further contain an optional component such as the additive described above. Examples of the optional component other than the additive include propane sultone, propene sultone, ethylene sulfite, 3,2-dioxathiolane-2,2-dioxide, vinylene carbonate, vinyl ethylene carbonate, fluoroethylene carbonate, adiponitrile, succinonitrile, and succinic anhydride. The optional component may be a lithium salt or may be capable of producing lithium ions.

### (Separator)

The lithium primary battery includes a separator usually provided between the positive electrode and the negative electrode. As the separator, a porous sheet made of an insulating material and resistant to the internal environment of the lithium primary battery should be used. Specific examples thereof include a nonwoven fabric made of a synthetic resin, a microporous film made of a synthetic resin, and a laminate these.

Examples of the synthetic resin used for the nonwoven fabric include polypropylene, polyphenylene sulfide, and polybutylene terephthalate. Examples of the synthetic resin used for the microporous film include polyolefin resins such as polyethylene, polypropylene, and ethylenepropylene copolymers. The microporous film may contain inorganic particles according to necessity.

The thickness of the separator is 5 µm or more and 100µm or less, for example.

FIG. 6 is a front view of a lithium primary battery according to an embodiment of the present disclosure, a part of which is illustrated in cross section.

A lithium primary battery 10 includes a bottomed cylindrical electrode case 100, a wound electrode group 200 housed in the electrode case 100, and a sealing plate 300 that closes the opening of the electrode case 100. The sealing plate 300 is fixed in the vicinity of the opening of the electrode case 100 by welding. An opening is formed at the center of the sealing plate 300, and an external terminal 330 is inserted in the opening. An insulative gasket 310 is provided between the external terminal 330 and the sealing plate 300. The electrode group 200 is housed in the electrode case 100 together with a nonaqueous electrolyte (not illustrated). In order to prevent internal short circuits, an upper insulating plate 230A and a lower insulating plate 230B are provided on the upper part and the lower part of the electrode group 200, respectively.

The electrode group 200 is configured by winding, into a spiral shape, a positive electrode 201 having a band shape and a negative electrode 202 having a band shape with a separator 203 therebetween. A negative electrode lead member 210 is connected to the negative electrode 202. The negative electrode lead member 210 is connected to the external terminal 330 (negative electrode terminal) by, for example, welding. A positive electrode lead member 220 is connected to the positive electrode 201. The positive electrode lead member 220 is connected to the inner bottom surface of the electrode case 100 by, for example, welding.

The negative electrode 202 includes at least a lithium alloy in the form of a foil (or a sheet). The lithium alloy contains Mg in an amount of 0.02 to 11% by mass. The S1/S0 rate of the negative electrode 202 is 90% or more. The positive electrode 201 extends from the outermost periphery to the innermost periphery of the electrode group 200.

No particular limitations are placed on the configuration and shape of the lithium primary battery. The wound electrode group may be cylindrical or flat. The lithium primary battery may have a cylindrical shape or a prismatic shape.

Examples of the material of the electrode case include stainless steel, nickel-plated steel sheets, iron, titanium, and aluminum. When the positive electrode and the electrode case are electrically connected as illustrated in FIG. 6, austenite-based stainless steel (e.g., SUS 316) is preferable from the viewpoint of corrosion resistance.

Although the external terminal in FIG. 6 is used as a negative electrode terminal, it may be used as a positive electrode terminal. That is, the positive electrode lead member may be connected to the external terminal, and the negative electrode lead member may be connected to the inner bottom surface of the battery case.

### <<Supplemental Remarks>>

According to the above description of the embodiments, the following techniques are disclosed.

### (Technique 1)

A lithium primary battery including:
a wound electrode group; and a nonaqueous electrolyte,
wherein the electrode group is configured by winding, into a spiral shape, a positive electrode having a band shape, a negative electrode having a band shape, and a separator located between the positive electrode and the negative electrode,
the positive electrode contains at least one selected from the group consisting of manganese dioxide and fluorinated graphite,
the negative electrode contains a lithium alloy,
the lithium alloy contains magnesium in an amount of 0.02% by mass or more and 11% by mass or less,
the negative electrode has a first negative electrode principal surface on an outer peripheral side of the electrode group, and a second negative electrode principal surface on an inner peripheral side of the electrode group,
the positive electrode has a first positive electrode principal surface on the inner peripheral side of the electrode group, and a second positive electrode principal surface on the outer peripheral side of the electrode group,
the first negative electrode principal surface has a first facing region facing the first positive electrode principal surface,
the second negative electrode principal surface has a second facing region facing the second positive electrode principal surface, and
a proportion of a total area S1 of the first facing region and the second facing region to a total area S0 of the first negative electrode principal surface and the second negative electrode principal surface is 90% or more.

### (Technique 2)

The lithium primary battery according to Technique 1, wherein the lithium alloy contains aluminum,
a content of the magnesium in the lithium alloy is 0.05% by mass or more and 3% by mass or less, and
a content of the aluminum in the lithium alloy is 0.01% by mass or more and 0.5% by mass or less.

### (Technique 3)

The lithium primary battery according to Technique 2, wherein the content of the magnesium in the lithium alloy is 0.2% by mass or more and 1% by mass or less.

### (Technique 4)

The lithium primary battery according to any one of Techniques 1 to 3, wherein a negative electrode lead member is connected to the negative electrode.

### (Technique 5)

The lithium primary battery according to Technique 4, wherein the positive electrode has an outermost peripheral portion located at an outermost periphery of the electrode group,
the negative electrode has a region X1 in which the first negative electrode principal surface faces the first positive electrode principal surface in the outermost peripheral portion, and
the negative electrode lead member is connected to the second negative electrode principal surface in the region X1.

### (Technique 6)

The lithium primary battery according to Technique 4, wherein the positive electrode has an outermost peripheral portion located at an outermost periphery of the electrode group, and an n-th peripheral portion located at an n-th turn inward of the outermost peripheral portion,
the negative electrode has a region X(n + 1) in which the first negative electrode principal surface faces the first positive electrode principal surface in the n-th peripheral portion, and
the negative electrode lead member is connected to the second negative electrode principal surface in the region X(n + 1).

### (Technique 7)

The lithium primary battery according to Technique 4, wherein the negative electrode lead member is connected in a vicinity of a center of the electrode group in a radial direction.

### (Technique 8)

The lithium primary battery according to any one of Techniques 4 to 7, wherein the negative electrode lead member has a first principal surface on a side of the negative electrode and a second principal surface on a side opposite the first principal surface,
the negative electrode lead member has a first region overlapping with the negative electrode and a second region in a vicinity of the first region,
the first region includes a connection region in close contact with the second negative electrode principal surface,
a first insulating tape is attached to the second negative electrode principal surface to cover the first principal surface in a region that is in the first region other than the connection region, and in the second region, and
a second insulating tape is attached to the second negative electrode principal surface to cover the second principal surface in the first region and the second region.

### (Technique 9)

The lithium primary battery according to any one of Techniques 1 to 8, wherein the negative electrode is a lithium alloy in a form of a foil, the lithium alloy not including a negative electrode current collector.

### [Examples]

Hereinafter, the present disclosure will be described further in detail based on examples and comparative examples. However, the present disclosure is not limited to the following examples.

### <<Example 1>>

### (Negative Electrode Production)

A lithium alloy foil was cut to obtain a negative electrode having a band shape. As the lithium alloy foil, a Li-Mg alloy foil having an Mg content of 0.5% by mass was used.

### (Positive Electrode Production)

A positive electrode mixture in a wet state was prepared by adding 5 parts by mass of Ketjen Black being a conductive agent, 5 parts by mass of polytetrafluoroethylene being a binder, and an appropriate amount of pure water to 100 parts by mass of a positive electrode active material, followed by kneading. As the positive electrode active material, an electrolytic manganese dioxide (MnO₂) sintered at 400°C for 5 hours was used.

Next, a positive electrode precursor was produced by introducing the positive electrode mixture into a positive electrode current collector composed of an expanded metal (height 0.2 mm) made of stainless steel. Thereafter, the positive electrode precursor was dried, rolled by roll pressing, and cut to obtain a positive electrode having a band shape. Subsequently, a portion of the introduced positive electrode mixture was peeled off, and one end of a positive electrode lead member made of stainless steel was resistance-welded to the exposed part of the positive electrode current collector.

A positive electrode was produced with the electrolytic manganese dioxide such that the ratio (positive electrode capacity/negative electrode capacity) was set to 0.93. Note that the positive electrode capacity is a value obtained by multiplying the mass of the manganese dioxide contained in the positive electrode by the theoretical capacity per 1 g of the manganese dioxide. The mass of the manganese dioxide was set to a value obtained by multiplying 0.9, the purity of the electrolytic manganese dioxide by the mass of the electrolytic manganese dioxide introduced into the positive electrode. The theoretical capacity per 1 g of the manganese dioxide is 308 mAh. The negative electrode capacity is a value obtained by multiplying the mass of the lithium contained in the negative electrode by the theoretical capacity (3861 mAh) per 1 g of lithium.

### (Negative Electrode Lead Member Attachment)

One end of a nickel-made negative electrode lead member was connected at the specified position of the negative electrode by pressure welding. A negative electrode lead was attached at the specified position of the negative electrode (second negative electrode principal surface) so as to be located in the region X1 (θ = 45° in FIG. 1) of the negative electrode in the electrode group production. Insulating tapes (a first insulating tape and a second insulating tape) were attached to the negative electrode so as to cover the negative electrode lead member. The insulating tapes were attached as illustrated in FIG. 3.

### (Electrode Group Production)

An electrode group was produced by winding the positive electrode and the negative electrode with a separator therebetween. A polypropylene-made microporous film having a thickness of 25 µm was used as the separator. The electrode group was configured so that the positive electrode had the first outermost peripheral portion and the S1/S0 rate was 100%.

### (Nonaqueous Electrolyte Preparation)

A nonaqueous electrolyte was prepared by dissolving LiCF₃SO₃ at a concentration of 0.6 mol/L in a mixed solvent of PC, EC, and DME (volume ratio 25:25:50).

### (Lithium Primary Battery Assembly)

The electrode group was housed in a stainless steel-made bottomed cylindrical electrode case (outer diameter 17.5 mm, height 50.5 mm) that also served as a positive electrode terminal. In doing so, an upper insulating plate and a lower insulating plate were provided on the upper end surface and the lower end surface of the electrode group, respectively. The other end of the positive electrode lead member and the inner surface of the bottom of the electrode case were connected by resistance welding. A sealing plate with an external terminal (negative electrode terminal) was prepared. A gasket was interposed between the sealing plate and the external terminal. The other end of the negative electrode lead member and the external terminal were connected by resistance welding. The nonaqueous electrolyte was injected into the electrode case. Thereafter, the open end of the electrode case and the peripheral edge of the sealing plate were laser-welded to seal the opening of the electrode case with the sealing plate. Thus, a lithium primary battery (battery A1) having the configuration illustrated in FIG. 6 was produced.

### <<Comparative Example 1>>

A battery B1 of Comparative Example 1 was produced in the same manner as the battery A1 of Example 1, except that a Li-Al alloy foil having an Al content of 0.2% by mass was used as the lithium alloy foil. The Li-Al alloy was a lithium alloy containing Al and substantially free of Mg.

### <<Comparative Example 2>>

A battery B2 of Comparative Example 2 was produced in the same manner as the battery A1 of Example 1, except that the S1/S0 rate was set to 89%. The S1/S0 rate was adjusted by changing the position of the end on the winding-start side of the negative electrode.

### <<Comparative Example 3>>

As the lithium alloy foil, a Li-Al alloy foil having an Al content of 0.2% by mass was used. The S1/S0 rate was set to 89%. The S1/S0 rate was adjusted by changing the position of the end on the winding-start side of the negative electrode. A battery B3 of Comparative Example 3 was produced in the same manner as the battery A1 of Example 1 except for the above.

### <<Comparative Example 4>>

A battery B4 of Comparative Example 4 was produced in the same manner as the battery B1 of Comparative Example 1, except that the negative electrode lead was attached at a specified position of the negative electrode (second negative electrode principal surface) so as to be located in the region X1 (θ = 270° in FIG. 1) of the negative electrode in the electrode group production.

### <<Examples 2 and 3 and Comparative Examples 5 and 6>>

Batteries A2 and A3 of Examples 2 and 3 and batteries B5 and B6 of Comparative Examples 5 and 6 were each produced in the same manner as the battery A1 of Example 1, except that a Li-Mg alloy foil having an Mg content as shown in Table 1 was used as the lithium alloy foil.

### <<Examples 4 and 5>>

Batteries A4 and A5 of Examples 4 and 5 were produced in the same manner as the battery A1 of Example 1, except that the S 1/SO rate was set to 95% for the battery A4 and 90% for the battery A5. The S1/S0 rate was adjusted by changing the position of the end on the winding-start side of the negative electrode.

### <<Example 6 and Comparative Example 7>>

A battery A6 of Example 6 and a battery B7 of Comparative Example 7 were produced in the same manner as the battery A1 of Example 1, except that fluorinated graphite ((CF)ₙ) and iron disulfide (FeS₂) were used as the positive electrode active material for the battery A6 and the battery B7, respectively.

### <<Comparative Example 8»

A battery B8 of Comparative Example 8 was produced in the same manner as the battery A6 of Example 6, except that a lithium metal foil was used instead of the lithium alloy foil.

### <<Examples 7 to 9>>

Batteries A7 to A9 of Example 7 to 9 were each produced in the same manner as the battery A1 of Example 1, except that the negative electrode lead was attached at a specified position of the negative electrode (second negative electrode principal surface) in the electrode group production so as to be located in the region X1 (θ = 90°, 180°, or 270° in FIG. 1) of the negative electrode.

### <<Examples 10 to 13>>

Batteries A10 to A13 of Examples 10 to 13 were each produced in the same manner as the battery A1 of Example 1, except that the negative electrode lead was attached at a specified position of the negative electrode (second negative electrode principal surface) in the negative electrode production so as to be located in the region X2 (θ = 45°, 90°, 180°, or 270° in FIG. 1) of the negative electrode.

### <<Examples 14 to 16>>

Batteries A14 to A16 of Examples 14 to 16 were each produced in the same manner as the battery A1 of Example 1, except that the negative electrode lead was attached at a specified position of the negative electrode (second negative electrode principal surface) in the negative electrode production so as to be located in the region X3, X4 or X5 (θ = 45° in FIG. 1) of the negative electrode.

### <<Examples 17 to 30>>

Batteries A17 to A30 of Examples 17 to 30 were each produced in the same manner as the battery A1 of Example 1, except that a Li-Mg-Al alloy foil having an Mg content and an Al content as shown in Table 7 was used as the lithium alloy foil.

### <<Examples 31 and 32>>

Batteries A31 and A32 of Examples 31 and 32 were produced in the same manner as the battery A27 of Example 27, except that the insulating tapes (first insulating tape and second insulating tape) were attached as illustrated in FIG. 4 and FIG. 5, respectively.

The produced batteries of Examples and Comparative Examples after the assembly were aged in an atmosphere at 45°C for 7 days and evaluated as follows.

### [Evaluation]

Each of the aged batteries was subjected to constant current discharge at 20 mA in an environment at 23 ± 2°C until the depth of discharge (DOD) reached 90% (amount of electricity discharged reached 90% of the positive electrode capacity). The battery having a DOD of 90 % was left to stand in an environment at 0°C for 4 hours or more, and then, subjected to pulse discharge at 500 mA in an environment at 0°C for 5 seconds to determine the lowest voltage at that time.

The evaluation results are shown in Tables 1 to 8. Tables 1 to 8 also show the positive electrode capacity.

**[Table 1]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| B1 | Li-Al alloy | - | 0.2 | MnO₂ | 100 | Region X1 (θ = 45°) | FIG. 3 | 3600 | 1.80 |
| B4 | Li-Al alloy | - | 0.2 | MnO₂ | 100 | Region X1 (θ = 270°) | FIG. 3 | 3600 | 1.60 |
| B2 | Li-Mg alloy | 0.5 | - | MnO₂ | 89 | Region X1 (θ = 45°) | FIG. 3 | 3589 | 1.98 |
| B3 | Li-Al alloy | - | 0.2 | MnO₂ | 89 | Region X1 (θ = 45°) | FIG. 3 | 3600 | 1.78 |
| Al | Li-Mg alloy | 0.5 | - | MnO₂ | 100 | Region X1 | FIG. 3 | 3589 | 2.29 |

| | | | | | | | | | |
|---|---|---|---|---|---|---|---|---|---|
| | | | | | | (θ = 45°) | | | |

**[Table 2]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| B5 | Li-Mg alloy | 0.01 | - | MnO₂ | 100 | Region X1 (θ = 45°) | FIG .3 | 3607 | 1.81 |
| A2 | Li-Mg alloy | 0.02 | - | MnO₂ | 100 | Region X1 (θ = 45°) | FIG .3 | 3607 | 2.22 |
| Al | Li-Mg alloy | 0.5 | - | MnO₂ | 100 | Region X1 (θ = 45°) | FIG .3 | 3589 | 2.29 |
| A3 | Li-Mg alloy | 11 | - | MnO₂ | 100 | Region X1 (θ = 45°) | FIG .3 | 3211 | 2.22 |
| B6 | Li-Mg alloy | 12 | - | MnO₂ | 100 | Region X1 (θ = 45°) | FIG .3 | 3175 | 1.98 |
| A4 | Li-Mg alloy | 0.5 | - | MnO₂ | 95 | Region X1 (θ = 45°) | FIG .3 | 3589 | 2.13 |
| A5 | Li-Mg alloy | 0.5 | - | MnO₂ | 90 | Region X1 (θ = 45°) | FIG .3 | 3589 | 2.09 |

**[Table 3]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| Al | Li-Mg alloy | 0.5 | - | MnO₂ | 100 | Region X1 (θ = 45°) | FIG .3 | 3589 | 2.29 |
| A6 | Li-Mg alloy | 0.5 | - | (CF)ₙ | 100 | Region X1 (θ = 45°) | FIG 3 | 3589 | 2.00 |
| B7 | Li-Mg alloy | 0.5 | - | FeS₂ | 100 | Region X1 (θ = 45°) | FIG .3 | 3589 | 0.85 |
| B8 | (Li metal) | - | - | (CF)ₙ | 100 | Region X1 (θ = 45°) | FIG 3 | 3589 | 1.30 |

**[Table 4]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| Al | Li-Mg alloy | 0.5 | - | MnO₂ | 100 | Region X1 (θ = 45°) | FIG. 3 | 3589 | 2.29 |
| A7 | Li-Mg alloy | 0.5 | - | MnO₂ | 100 | Region X1 (θ = 90°) | FIG. 3 | 3589 | 2.23 |
| A8 | Li-Mg alloy | 0.5 | - | MnO₂ | 100 | Region X1 (θ = 180°) | FIG. 3 | 3589 | 2.22 |
| A9 | Li-Mg alloy | 0.5 | - | MnO₂ | 100 | Region X1 (θ = 270°) | FIG. 3 | 3589 | 2.22 |

**[Table 5]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| A10 | Li-Mg alloy | 0.5 | - | MnO₂ | 100 | Region X2 (θ = 45°) | FIG. 3 | 3589 | 2.32 |
| All | Li-Mg alloy | 0.5 | - | MnO₂ | 100 | Region X2 (θ = 90°) | FIG. 3 | 3589 | 2.31 |
| A12 | Li-Mg alloy | 0.5 | - | MnO₂ | 100 | Region X2 (θ = 180°) | FIG. 3 | 3589 | 2.30 |
| A13 | Li-Mg alloy | 0.5 | - | MnO₂ | 100 | Region X2 (θ = 270°) | FIG. 3 | 3589 | 2.31 |

**[Table 6]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| Al | Li-Mg alloy | 0.5 | - | MnO₂ | 100 | Region X1 (θ = 45°) | FIG. 3 | 3589 | 2.29 |
| A10 | Li-Mg alloy | 0.5 | - | MnO₂ | 100 | Region X2 (θ = 45°) | FIG. 3 | 3589 | 2.32 |
| A14 | Li-Mg alloy | 0.5 | - | MnO₂ | 100 | Region X3 | FIG. 3 | 3589 | 2.33 |

| | | | | | | | | | |
|---|---|---|---|---|---|---|---|---|---|
| | | | | | | (θ = 45°) | | | |
| A15 | Li-Mg alloy | 0.5 | - | MnO₂ | 100 | Region X4 (θ = 45°) | FIG. 3 | 3589 | 2.32 |
| A16 | Li-Mg alloy | 0.5 | - | MnO₂ | 100 | Region X5 (θ = 45°) | FIG. 3 | 3589 | 2.29 |

**[Table 7]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| A17 | Li-Mg-Al alloy | 0.05 | 0.01 | MnO₂ | 100 | Region X1 (θ = 45°) | FIG. 3 | 3585 | 2.25 |
| A18 | Li-Mg-Al alloy | 0.05 | 0.1 | MnO₂ | 100 | Region X1 (θ = 45°) | FIG. 3 | 3602 | 2.28 |
| A19 | Li-Mg-Al alloy | 0.05 | 0.5 | MnO₂ | 100 | Region X1 (θ = 45°) | FIG. 3 | 3588 | 2.27 |
| A23 | Li-Mg-Al alloy | 0.2 | 0.1 | MnO₂ | 100 | Region X1 (θ = 45°) | FIG. 3 | 3597 | 2.32 |
| A24 | Li-Mg-Al alloy | 0.2 | 0.5 | MnO₂ | 100 | Region X1 (θ = 45°) | FIG. 3 | 3582 | 2.33 |
| A25 | Li-Mg-Al alloy | 0.5 | 0.01 | MnO₂ | 100 | Region X1 (θ = 45°) | FIG. 3 | 3572 | 2.32 |
| A26 | Li-Mg-Al alloy | 0.5 | 0.1 | MnO₂ | 100 | Region X1 (θ = 45°) | FIG. 3 | 3586 | 2.35 |
| A27 | Li-Mg-Al alloy | 0.5 | 0.5 | MnO₂ | 100 | Region X1 (θ = 45°) | FIG. 3 | 3571 | 2.35 |
| A28 | Li-Mg-Al alloy | 1 | 0.01 | MnO₂ | 100 | Region X1 (θ = 45°) | FIG. 3 | 3554 | 2.31 |
| A29 | Li-Mg-Al alloy | 1 | 0.1 | MnO₂ | 100 | Region X1 (θ = 45°) | FIG. 3 | 3568 | 2.34 |
| A30 | Li-Mg-Al alloy | 1 | 0.5 | MnO₂ | 100 | Region X1 (θ = 45°) | FIG. 3 | 3553 | 2.33 |
| A20 | Li-Mg-Al alloy | 3 | 0.01 | MnO₂ | 100 | Region X1 (θ = 45°) | FIG. 3 | 3554 | 2.24 |
| A21 | Li-Mg-Al alloy | 3 | 0.1 | MnO₂ | 100 | Region X1 (θ = 45°) | FIG. 3 | 3496 | 2.27 |
| A22 | Li-Mg-Al alloy | 3 | 0.5 | MnO₂ | 100 | Region X1 (θ = 45°) | FIG. 3 | 3481 | 2.28 |

**[Table 8]**

| Battery | Negative electrode active material (lithium alloy) | | | Positive electrode active material | S1/S0 rate (%) | Negative electrode lead attachment position | Insulating tape attachment | Positive electrode capacity (mAh) | Lowest voltage in low-temperature pulse discharge (V) |
|---|---|---|---|---|---|---|---|---|---|
| | Alloy composition | Mg content (% by mass) | Al content (% by mass) | | | | | | |
| A27 | Li-Mg-Al alloy | 0.5 | 0.5 | MnO₂ | 100 | Region X1 (θ = 45°) | FIG. 3 | 3571 | 2.35 |
| A31 | Li-Mg-Al alloy | 0.5 | 0.5 | MnO₂ | 100 | Region X1 (θ = 45°) | FIG. 4 | 3571 | 2.36 |
| A32 | Li-Mg-Al alloy | 0.5 | 0.5 | MnO₂ | 100 | Region X1 (θ = 45°) | FIG. 5 | 3571 | 2.37 |

As shown in Tables 1 and 2, the batteries A1 to A5 having an S1/S0 rate of 90% or more, having an Mg content in the Li-Mg alloy of the negative electrode in the range of 0.02 to 11% by mass, and containing manganese dioxide in the positive electrode exhibited superior pulse discharge characteristics to those of the batteries B1 to B6.

Compared to the battery B3 having an S1/S0 rate of 89% and including a negative electrode containing the Li-Al alloy, the pulsed discharge characteristics were significantly improved in the battery A1 having an S1/S0 rate of 100% and having an Mg content in the Li-Mg alloy of the negative electrode of 0.5% by mass (B3 → A1).

In the battery B1, the S1/S0 rate was 100%, while the negative electrode was made of a Li-Al alloy. As a result, the strength of the negative electrode decreased, leading to fracture of the negative electrode at the end of discharge. Further, the pulse discharge characteristics did not improve as compared to the battery B3 (B3 → B1).

In the battery B2, the Mg content in the Li-Mg alloy was 0.5% by mass or more, while the S1/S0 rate was 89%, resulting in nonuniform consumption of lithium in the negative electrode to cause fracture of the negative electrode at the end of discharge. Thus, the degree of improvement in pulse discharge characteristics was smaller than that of the battery B3 (B3 → B2).

The pulse discharge characteristics were further deteriorated in the battery B4 in which the connection point of the negative electrode lead member was located in the region X1 (θ = 270° in FIG. 1) as compared to the battery B1 in which the connection point of the negative electrode lead member was located in the region X1 (θ = 45° in FIG. 1).

In the battery B5, the Mg content in the Li-Mg alloy was less than 0.02% by mass, leading to a decrease in strength of the negative electrode, fracture of the negative electrode at the end of discharge, and deterioration of the pulse discharge characteristics. In the battery B6, the Mg content in the Li-Mg alloy was more than 11% by mass to reduce the amount of Li in the negative electrode, leading to deterioration of the pulse discharge characteristics.

As shown in Tables 3, excellent pulse discharge characteristics were obtained in the battery A6 having an S1/S0 rate of 100%, having an Mg content in the Li-Mg alloy of the negative electrode of 0.5% by mass, and containing fluorinated graphite in the positive electrode. In the battery B8 containing fluorinated graphite in the positive electrode, the S1/S0 rate was 100%. However, due to the use of the lithium metal foil in the negative electrode, the strength of the negative electrode decreased, and the negative electrode fractured at the end of discharge, resulting in deterioration of the pulse discharge characteristics.

In the battery B7, the Mg content in the Li-Mg alloy was 0.5% by mass and the S1/S0 rate was 100%. However, the lowest voltage in the pulse discharge was significantly low due to the positive electrode active material being iron disulfide.

As shown in Table 4, excellent pulse discharge characteristics were obtained in each of the batteries A1 and A7 to A9 in which the negative electrode lead was connected at a specified position in the region X1 (θ = 45°, 90°, 180°, or 270° in FIG. 1). Among the cases in which the negative electrode lead is connected to the region X1, the pulse discharge characteristics were further improved when θ = 45° (battery A1).

As shown in Table 5, excellent pulse discharge characteristics were obtained in each of the batteries A10 to A13 in which the negative electrode lead was connected at a specified position in the region X2 (θ = 45°, 90°, 180°, or 270° in FIG. 1).

As shown in Table 6, among the cases in which the negative electrode lead was connected in any of the regions X1 to X5 (θ = 45° in FIG. 1) in FIG. 1, the closer the connection position of the negative electrode lead member was to the center of the electrode group in the radial direction, the more significantly the pulse discharge characteristics were improved.

As shown in Table 7, the pulse discharge characteristics were improved in the batteries A17 to A30 in which the Li-Mg-Al alloy was used for the negative electrode, the Mg content was 0.05 to 3% by mass, and the Al content was 0.01 to 0.5% by mass. In particular, the pulse discharge characteristics were greatly improved in the batteries A23 to A30 in which the Li-Mg-Al alloy was used for the negative electrode, the Mg content was 0.2 to 1% by mass, and the Al content was 0.01 to 0.5% by mass.

As shown in Table 8, excellent pulse discharge characteristics were obtained in each of the batteries A27, A31, and A32 in which the insulating tapes to cover the negative electrode lead member were attached to the negative electrode as shown in FIG. 3, FIG. 4, and FIG. 5, respectively. The smaller the area of the negative electrode covered with the insulating tapes, the higher the lowest voltage in the pulse discharge in the batteries. The lowest voltage in the pulse discharge was the highest in the battery A32.

### [Industrial Applicability]

The lithium primary battery of the present disclosure is suitably used, for example, as a main power supply for various meters (e.g., smart meters for electricity, water, or gas) or a memory backup power supply.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference sings List]

10: lithium primary battery, 100: electrode case, 200: electrode group 201: positive electrode, 202; negative electrode, 203: separator, 210: negative electrode lead member, 210a: first region, 210b: second region, 210c: connection region, 220: positive electrode lead member, 230A: upper insulating plate, 230B: lower insulating plate, 240: insulating tape, 240a: first insulating tape, 240b: second insulating tape, 300: sealing plate, 310: gasket, 330: external terminal

## Claims

1. A lithium primary battery comprising:
a wound electrode group; and a nonaqueous electrolyte,
wherein the electrode group is configured by winding, into a spiral shape, a positive electrode having a band shape, a negative electrode having a band shape, and a separator located between the positive electrode and the negative electrode,
the positive electrode contains at least one selected from the group consisting of manganese dioxide and fluorinated graphite,
the negative electrode contains a lithium alloy,
the lithium alloy contains magnesium in an amount of 0.02% by mass or more and 11% by mass or less,
the negative electrode has a first negative electrode principal surface on an outer peripheral side of the electrode group, and a second negative electrode principal surface on an inner peripheral side of the electrode group,
the positive electrode has a first positive electrode principal surface on the inner peripheral side of the electrode group, and a second positive electrode principal surface on the outer peripheral side of the electrode group,
the first negative electrode principal surface has a first facing region facing the first positive electrode principal surface,
the second negative electrode principal surface has a second facing region facing the second positive electrode principal surface, and
a proportion of a total area S1 of the first facing region and the second facing region to a total area SO of the first negative electrode principal surface and the second negative electrode principal surface is 90% or more.

2. The lithium primary battery according to claim 1,
wherein the lithium alloy contains aluminum,
a content of the magnesium in the lithium alloy is 0.05% by mass or more and 3% by mass or less, and
a content of the aluminum in the lithium alloy is 0.01% by mass or more and 0.5% by mass or less.

3. The lithium primary battery according to claim 2,
wherein the content of the magnesium in the lithium alloy is 0.2% by mass or more and 1% by mass or less.

4. The lithium primary battery according to claim 1,
wherein a negative electrode lead member is connected to the negative electrode.

5. The lithium primary battery according to claim 4,
wherein the positive electrode has an outermost peripheral portion located at an outermost periphery of the electrode group,
the negative electrode has a region X1 in which the first negative electrode principal surface faces the first positive electrode principal surface in the outermost peripheral portion, and
the negative electrode lead member is connected to the second negative electrode principal surface in the region X1.

6. The lithium primary battery according to claim 4,
wherein the positive electrode has an outermost peripheral portion located at an outermost periphery of the electrode group, and an n-th peripheral portion located at an n-th turn inward of the outermost peripheral portion,
the negative electrode has a region X(n + 1) in which the first negative electrode principal surface faces the first positive electrode principal surface in the n-th peripheral portion, and
the negative electrode lead member is connected to the second negative electrode principal surface in the region X(n + 1).

7. The lithium primary battery according to claim 4,
wherein the negative electrode lead member is connected in a vicinity of a center of the electrode group in a radial direction.

8. The lithium primary battery according to claim 4,
wherein the negative electrode lead member has a first principal surface on a side of the negative electrode and a second principal surface on a side opposite the first principal surface,
the negative electrode lead member has a first region overlapping with the negative electrode and a second region in a vicinity of the first region,
the first region includes a connection region in close contact with the second negative electrode principal surface,
a first insulating tape is attached to the second negative electrode principal surface to cover the first principal surface in a region that is in the first region other than the connection region, and in the second region, and
a second insulating tape is attached to the second negative electrode principal surface to cover the second principal surface in the first region and the second region.

9. The lithium primary battery according to claim 1,
wherein the negative electrode is a lithium alloy in a form of a foil, the lithium alloy not including a negative electrode current collector.
